(19) Europäisches Patentamt
European Patent Office
Office européen des brevets

(11) Veröffentlichungsnummer : **0 039 018**
**B1**

(12) # EUROPÄISCHE PATENTSCHRIFT

(45) Veröffentlichungstag der Patentschrift : **28.08.85**

(51) Int. Cl.[4] : **C 08 G 59/22**, C 08 G 59/42, C 08 G 59/68

(21) Anmeldenummer : **81102962.8**

(22) Anmeldetag : **16.04.81**

(54) **Schnellhärtende Epoxidharzmassen.**

(30) Priorität : **25.04.80 DE 3016097**

(43) Veröffentlichungstag der Anmeldung : **04.11.81 Patentblatt 81/44**

(45) Bekanntmachung des Hinweises auf die Patenterteilung : **28.08.85 Patentblatt 85/35**

(84) Benannte Vertragsstaaten : **AT CH DE FR IT LI NL**

(56) Entgegenhaltungen :
**CH-A- 546 806**
**DE-A- 2 254 487**
**DE-A- 2 516 377**
**DE-A- 2 642 465**
**Die Akte enthält technische Angaben, die nach dem Eingang der Anmeldung eingereicht wurden und die nicht in dieser Patentschrift enthalten sind.**

(73) Patentinhaber : **Siemens Aktiengesellschaft**
**Berlin und München Wittelsbacherplatz 2**
**D-8000 München 2 (DE)**

(72) Erfinder : **Reeh, Ulrike**
**Hollerstrasse 7a**
**D-8000 München 50 (DE)**
Erfinder : **Denk, Hans, Dr.**
**Hauserstrasse 38**
**D-8035 Gauting (DE)**

**EP 0 039 018 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft schnellhärtende Epoxidharzmassen auf der Basis von Diglycidylverbindungen, Carbonsäureanhydriden, niedermolekularen sauren Estern, Metallsalzen organischer Säuren und Hilfs- und Zusatzstoffen.

Die bekannten Epoxidharzmassen auf Basis säureanhydridhärtbarer Diglycidylester, die üblicherweise mit Aminen, wie z. B. tertiären Aminen, $BF_3$-Aminkomplexen, freien Carbonsäuren beschleunigt werden, weisen eine relativ lange Gelierzeit auf.

Es sind ferner Gießharzmassen zum Verguß von optoelektronischen Bauelementen auf Basis von säureanhydridhärtbaren Cycloaliphaten, enthaltend Zinkoctoat, ein niedermolekulares Polyol und/oder einen niedermolekularen sauren Ester und gegebenenfalls eine organische Phosphorverbindung (DE-A-2 642 465) bekannt.

Zum Überziehen von Gegenständen werden gemäß der DE-A-2 516 377 flüssige Gemische verwendet enthaltend Polyepoxide mit mindestens 30 Gew.-% eines Diglycidylesters, Säureanhydride als Härtemittel und eine Aminoverbindung oder ein Stannosaltz einer Carbonsäure als Härtebeschleuniger.

Heißhärtbare Mischungen auf Epoxidharzbasis enthaltend Polyepoxidverbindungen als Polyglycidylether oder Polyglycidylester, ein Polycarbonsäureanhydrid und eine Diesterdicarbonsäure sind aus der DE-A-2 254 487 bekannt.

Der Erfindung liegt die Aufgabe zugrunde, Epoxidharzmassen auf Diglycidylester/Säureanhydridbasis bei erhöhter Temperatur schnell zu härten, damit eine möglichst kurze Werkzeugbelegungszeit erreicht wird.

Die Aufgabe wird erfindungsgemäß gelöst mit Epoxidharzmassen, die erfindungsgemäß neben Carbonsäureanhydriden, Diglycidylester und als Beschleiniger Zinkoctoat, gelöst in einem niedermolekularen sauren Ester, gegebenenfalls zusammen mit einer organischen Phosphorverbindung enthalten. Derartige Epoxidharzmassen sind bereits nach 2 bis 3 Minuten bei 120 °C so weit angehärtet, daß damit z. B. umhüllte Bauelemente ohne Beschädigung entformt werden können.

Epoxidharzmassen gemäß der Erfindung sind besonders geeignet zum Abdecken, Umhüllen, Verkleben und Imprägnieren von elektrischen Bauelementen. Durch geeignete Auswahl der Ausgangsstoffe zusammen mit Hilfs- und Zusatzstoffen lassen sich daraus Preßmassen, Gießharze, Kleb- und Imprägnierharze herstellen.

Geeignete Diglycidylester, die sich als besonders geeignet erwiesen haben, sind Hexahydrophthalsäurediglycidylester, Phthalsäurediglycidylester, Tetrahydrophthalsäurediglycidylester und aliphatische Diglycidylester.

Eine spezielle Ausführungsform dieser Erfindung ist eine transparente, flüssige Gießharzmasse, bestehend aus Hexahydrophthalsäurediglycidylester, Hexahydrophthalsäureanhydrid, Hexahydrophthalsäuremonoäthylester oder einem sauren Ester der Formel

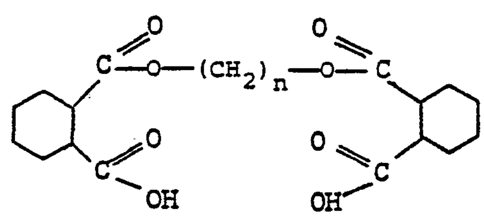

mit n = 1 bis 4, Zinkoctoat und Diphenylphosphit. Die Gießharzmasse läßt sich bei Raumtemperatur verarbeiten. Überraschenderweise ergibt der daraus hergestellte Formstoff selbst nach einer 1/2 jährigen Temperaturlagerung bei 120 °C noch keine nennenswerte Verminderung der Lichtdurchlässigkeit. Die oben genannten Eigenschaften sind besonders vorteilhaft für den Einsatz dieses Gießharzes für optoelektronische Bauelemente wie z. B. Lumineszenzdioden, Displays, Fototransistoren und Fotodioden.

Neben der notwendigen Lichtechtheit für Optoelektronikanwendungen ermöglicht die schnelle Härtung eine wirtschaftliche Fertigung, was insbesondere bei einer kontinuierlichen Herstellung vergossener Bauelemente in großen Stückzahlen von Vorteil ist.

Die Erfindung wird durch folgende Beispiele näher erläutert.

Beispiel 1

Herstellung des Gießharzvorgemisches Komponente A :

100 Gewichtsteile des Hexahydrophthalsäurediglycidylesters mit einem Epoxidwert von 0,65 ± 0,01 Mol/100 g werden auf 60 °C aufgewärmt und bei dieser Temperatur 0,000 15 Gewichtsteile des optischen Aufhellers Waxoline violett A® eingemischt. Vor Zusammenmischen mit der Komponente B wird diese Mischung auf Raumtemperatur abgekühlt.

Herstellen des Gießharzvorgemisches Komponente B :

12 Gewichtsteile des sauren Esters Hexahydrophthalsäuremonoäthylester (falls er auskristallisiert ist, wird er bei 35-40 °C aufgeschmolzen) werden mit 6 Gewichtsteilen Zinkoctoat und 7 Gewichtsteilen Diphenyldecylphosphit bei Raumtemperatur gemischt. In diese Mischung werden 85 Gewichtsteile des bei 80 °C aufgeschmolzenen Härters Hexahydrophthalsäureanhydrid beigemischt. Diese Mischung wird auf Raumtemperatur abgekühlt.

Herstellen der Gießharzmasse :

100 Gewichtsteile der Komponente A werden mit 110 Gewichtsteilen der Komponente B bei Raumtemperatur homogen vermischt und gegebenenfalls entlüftet.

Beispiel 2

Herstellung des Gießharzvorgemisches Komponente A :

100 Gewichtsteile des Hexahydrophthalsäurediglycidylesters mit einem Epoxidwert von 0,65 ± 0,01 Mol/100 g werden auf 60 °C aufgewärmt und bei dieser Temperatur 0,000 15 Gewichtsteile des optischen Aufhellers Waxoline violett A® eingemischt. Vor dem Zusammenmischen mit der Komponente B wird diese Mischung auf Raumtemperatur abgekühlt.

Herstellen des Gießharzvorgemisches Komponente B :

11,5 Gewichtsteile des sauren Esters aus 1 Mol Äthylenglykol und 2 Mol Hexahydrophthalsäureanhydrid (den kristallisierten Ester bei 100-120 °C aufschmelzen) werden mit 6 Gewichtsteilen Zinkoctoat und 7 Gewichtsteilen Diphenyldecylphosphit bei 40 bis 60 °C gemischt. In diese Mischung werden 85 Gewichtsteile des bei 80 °C aufgeschmolzenen Härters Hexahydrophthalsäureanhydrid beigemischt. Diese Mischung wird auf Raumtemperatur abgekühlt.

Herstellen der Gießharzmasse :

100 Gewichtsteile Komponente A werden mit 109,5 Gewichtsteilen der Komponente B bei Raumtemperatur homogen vermischt und gegebenenfalls entlüftet.

Diese Gießharzmasse mit Hexahydrophthalsäurediglycidylester als Epoxidverbindung härtet im Vergleich zu der Gießharzmasse, die als Epoxidverbindung den Cycloaliphaten (3,4-Epoxicyclohexylmethyl-(3,4-epoxi)cyclohexancarboxylat) enthält, bei 150 °C um ein Vielfaches schneller, was aus der Tabelle ersichtlich ist.

Tabelle

| Harz | Gelierzeiten bei 150 °C | bei 140 °C | bei 130 °C | bei 120 °C |
|---|---|---|---|---|
| Cycloaliphat. Epoxidharz | 1′ 46″ | 2′ 48″ | 5′ | 8′ |
| Hexahydrophthalsäurediglycidylester | 24″ | 45″ | 1′ 30″ | 1′ 35″ |

Beispiel 3

Herstellung des Gießharzvorgemisches Komponente A :

100 Gewichtsteile des Hexahydrophthalsäurediglycidylesters mit einem Epoxidwert von 0,65 ± 0,01 Mol/100 g werden auf 60 °C aufgewärmt und bei dieser Temperatur 0,000 15 Gewichtsteile des optischen Aufhellers Waxoline violett A® eingemischt. Vor dem Zusammenmischen mit der Komponente B wird diese Mischung auf Raumtemperatur abgekühlt.

Herstellen des Gießharzvorgemisches Komponente B :

14 Gewichtsteile des sauren Esters, hergestellt aus 1 Mol 1,2-Propandiol und 2 Mol Hexahydrophthalsäureanhydrid (der Ester wird bei 80 °C aufgeschmolzen) werden mit 6 Gewichtsteilen Zinkoctoat und 7 Gewichtsteilen Diphenyldecylphosphit bei 60 °C gemischt. In diese Mischung werden 83 Gewichtsteile des bei 80 °C aufgeschmozenen Härters Hexahydrophthalsäureanhydrid beigemischt. Diese Mischung wird auf 40 + 5 °C abgekühlt.

Herstellen der Gießharzmasse :

100 Gewichtsteile der Komponente A werden mit 110 Gewichtsteilen der Komponente B (40 + 5 °C) bei Raumtemperatur homogen gemischt und gegebenenfalls entlüftet.

Beispiel 4

Gießharzvorgemisch Komponente A :

Hexahydrophthalsäurediglycidylester mit einem Epoxidwert von 0,65 ± 0,01 Mol/100 g.

Herstellen des Gießharzvorgemisches Komponente B :

21 Gewichtsteile des sauren Esters, hergestellt aus 1 Mol 3-Methylpentandiol-1,5 und 2 Mol Methylhexahydrophthalsäureanhydrid (der Ester wird bei 90 °C aufgeschmolzen) werden mit 6 Gewichtsteilen Zinkoctoat und 7 Gewichtsteilen Diphenyldecylphosphit bei 60 °C gemischt. In diese Mischung werden 88 Gewichtsteile des bei Raumtemperatur flüssigen Härters Methylhexahydrophthalsäureanhydrid beigemischt. Zur besseren Durchmischung wird diese Mischung auf 40 + 5 °C gehelten.

Herstellen der Gießharzmasse :

100 Gewichtsteile der Komponente A werden mit 122 Gewichtsteilen der Komponente B (40 + 5 °C) bei Raumtemperatur homogen vermischt und gegebenenfalls entlüftet.

## Beispiel 5

Gießharzvorgemisch Komponente A :

Hexahydrophthalsäurediglycidylester mit einem Epoxidwert von 0,65 ± 0,01 Mol/100 g.

Herstellen des Gießharzvorgemisches Komponente B :

13 Gewichtsteile des sauren Esters, hergestellt aus 1 Mol 3-Methylpentandiol-1,5 und 2 Mol Hexahydrophthalsäureanhydrid (der Ester wird bei 90 °C aufgenchmolzen) werden mit 6 Gewichtsteilen Zinkoctoat und 7 Gewichtsteilen Diphenyldecylphosphit bei 60 °C gemischt. In diese Mischung werden 85 Gewichtsteile des bei 80 °C aufgeschmolzenen Härters Hexahydrophthalsäureanhydrid beigemischt. Diese Mischung wird auf 40 + 5 °C abgekühlt.

Herstellen der Gießharzmasse :

100 Gewichtsteile der Komponente A werden mit 111 Gewichtsteilen der Komponente B (40 + 5 oC) homogen vermischt und gegebenenfalls entlüftet.

## Beispiel 6

Gießharzvorgemisch Komponente A :

Hexahydrophthalsäurediglycidylester mit einem Epoxidwert von 0,65 ± 0,01 Mol/100 g.

Herstellen des Gießharzvorgemisches Komponente B :

29 Gewichtsteile des sauren Esters, Hergestellt aus 1 Mol Trimethylolpropan und 3 Mol Dodecenylbernsteinsäureanhydrid (der Ester wird bei 60 °C aufgeschmolzen) werden mit 6 Gewichtsteilen Zinkoctoat und 7 Gewichtsteilen Diphenyldecylphosphit bei 60 °C homogen vermischt. In diese Mischung werden 140 Gewichtsteile des bei Raumtemperatur flüssigen Härters Dodecenylbernsteinsäureanhydrid beigemischt. Diese Mischung wird auf Raumtemperatur abgekühlt.

Herstellen der Gießharzmasse :

100 Gewichtsteile der Komponente A werden mit 182 Gewichtsteilen der Komponente B bei Raumtemperatur homogen vermischt und gegebenenfalls entlüftet.

## Beispiel 7

Gießharzvorgemisch Komponente A :

Hexahydrophthalsäurediglycidylester mit einem Epoxidwert von 0,65 ± 0,01 Mol/100 g.

Herstellen des Gießharzvorgemisches Komponente B :

48,5 Gewichtsteile des sauren Esters, hergestellt aus 1 Mol Rizinusöl und 1 Mol Hexahydrophthalsäureanhydrid werden mit 6 Gewichtsteilen Zinkoctoat und 7 Gewichtsteilen Diphenyldecylphosphit bei 30 + 5 °C homogen vermischt. In diese Mischung werden 80,5 Gewichtsteile des bei 80 °C aufgeschmolzenen Härters Hexahydrophthalsäureanhydrid beigemischt. Diese Mischung wird auf Raumtemperatur abgekühlt.

Herstellen der Gießharzmasse :

100 Gewichtsteile der Komponente A werden mit 142 Gewichtsteilen der Komponente B bei Raumtemperatur homogen vermischt und gegebenenfalls entlüftet.

## Beispiel 8

Gießherzvorgemisch Komponente A :

Tetrahydrophthalsäurediglycidylester mit einem Epoxidwert von 0,61 ± 0,01 Mol/100 g.

Herstellen des Gießharzvorgemisches Komponente B :

14 Gewichtsteile des sauren Esters Hexahydrophthalsäuremonoäthylester (falls er auskristallisiert ist, wird er bei 35-40 °C aufgeschmolzen) werden mit 6 Gewichtsteilen Zinkoctoat und 7 Gewichtsteilen Diphenyldecylphosphit bei Raumtemperatur gemischt. In diese Mischung werden 78 Gewichtsteile des bei 80 °C aufgeschmolzenen Härters Hexahydrophthalsäureanhydrid beigemischt. Diese Mischung wird auf Raumtemperatur abgekühlt.

Herstellen der Gießharzmasse :

100 Gewichtsteile der Komponente A werden mit 105 Gewichtsteilen der Komponente B bei Raumtemperatur homogen vermischt und gegebenenfalls entlüftet.

Tabelle

Eigenschaftswerte des ausgehärteten Formstoffes

| Beispiel | Gelierzeit bei 120 °C | Biegefestigkeit ($N/mm^2$) DIN 53 452 | Biegewinkel (Grad) DIN 53 452 | Schlagzähigkeit ($Nmm/mm^2$) DIN 53 453 | Martenstemperatur (°C) DIN 53 458 |
|---|---|---|---|---|---|
| 1 | 1' 35" | 131 | 18 | 12,4 | 84 |
| 2 | 1' 40" | 150 | 20 | 10 | 81 |
| 3 | 1' 40" | 140 | 24 | 13,3 | 79 |
| 4 | 0' 32" | 137 | 23 | 10 | 82 |
| 5 | 1' 27" | 119 | 22 | 7,7 | 83 |
| 6 | 1' 11" | 83 | 26 | 6,5 | 44 |
| 7 | 1' 53" | 117 | 30 | 10 | 48 |
| 8 | 3' 40" | 132 | 20 | 8,5 | 64 |

**Patentansprüche**

1. Schnellhärtendende Epoxidharzmassen auf der Basis von Diglycidylverbindungen, Carbonsäureanhydriden, niedermolekularen sauren Estern, Metallsalzen organischer Säuren und Hilfs- und Zusatzstoffen, dadurch gekennzeichnet, daß sie neben Carbonsäureanhydrid als Diglycidylverbindungen Diglycidylester und als Beschleuniger Zinkoctoat, gelöst in einem niedermolekularen sauren Ester, gegebenenfalls zusammen mit einer organischen Phosphorverbindung enthalten.

2. Schnellhärtende Epoxidharzmassen nach Anspruch 1, dadurch gekennzeichnet, daß sie. als Diglycidylester Hexahydrophthalsäurediglycidylester oder dessen Derivate enthalten.

3. Schnellhärtende Epoxidharzmassen nach Anspruch 1, dadurch gekennzeichnet, daß sie als Diglycidylester Phthalsäurediglycidylester oder dessen Derivate enthalten.

4. Schnellhärtende Epoxidharzmassen nach Anspruch 1, dadurch gekennzeichnet, daß sie als Diglycidylester Tetrahydrophthalsäurediglycidylester enthalten.

5. Schnellhärtende Epoxidharzmassen nach Anspruch 1, dadurch gekennzeichnet, daß sie aliphatische Diglycidylester enthalten.

6. Schnellhärtende Epoxidharzmassen nach Anspruch 1 bis 5, dadurch gekennzeichnet, daß der niedermolekulare saure Ester Hexahydrophthalsäuremonoäthylester ist.

7. Schnellhärtende Epoxidharzmassen nach Anspruch 1 bis 5, dadurch gekennzeichnet, daß sie als niedermolekularen sauren Ester eine Verbindung der Formel

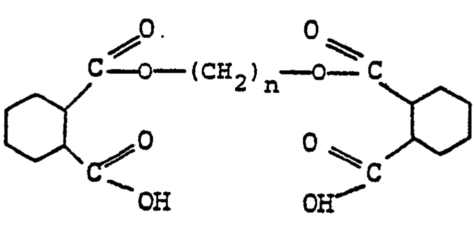

worin n 1-4 ist, enthalten.

8. Schnellhärtende Epoxidharzmassen nach Anspruch 1 bis 7, dadurch gekennzeichnet, daß die organische Phosphorverbindung ein Phosphit ist.

9. Verwendung schnellhärtender Epoxidharzmassen nach Anspruch 1 bis 8 zur Herstellung von Gießharzmassen, Preßmassen, Klebstoffen.

10. Verwendung schnellhärtender Epoxidharzmassen nach Anspruch 1 bis 9 für elektrische Bauelemente und Baugruppen.

**Claims**

1. Rapid-hardening epoxy resin compositions based on diglycidyl compounds, carboxylic acid anhydrides, low-molecular acid esters, metal salts of organic acids, and auxiliary and additional materials, characterised in that in addition to carboxylic acid anhydride they contain diglycidyl esters as diglycidyl compounds and, as the catalyst, zinc octoate dissolved in a low-molecular acid ester, if necessary together with an organic phosphorus compound.

2. Rapid-hardening epoxy resin compositions according to claim 1, characterised in that they

contain hexahydrophthalic acid diglycidyl ester or its derivatives as the diglycidyl ester.

3. Rapid-hardening epoxy resin compositions according to claim 1, characterised in that they contain phthalic acid diglycidyl ester or its derivatives as the diglycidyl ester.

4. Rapid-hardening epoxy resin compositions according to claim 1, characterised in that they contain tetrahydrophthalic acid diglycidyl ester as the diglycidyl ester.

5. Rapid-hardening epoxy resin compositions according to claim 1, characterised in that they contain aliphatic diglycidyl esters.

6. Rapid-hardening epoxy resin compositions according to claims 1 to 5, characterised in that the low-molecular acid ester is hexahydrophthalic acid monoethyl ester.

7. Rapid-hardening epoxy resin compositions according to claims 1 to 5, characterised in that they contain as the low-molecular acid ester a compound of the formula.

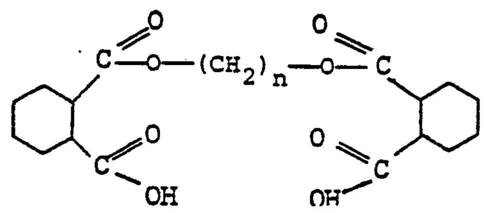

wherein n is 1-4.

8. Rapid-hardening epoxy resin compositions according to claims 1 to 7, characterised in that the organic phosphorous compound is a phosphite.

9. The use of rapid-hardening epoxy resin compositions according to claims 1 to 8 for producing cast resin compositions, moulded compositions, adhesive substances.

10. The use of rapid-hardening epoxy resin compositions according to claims 1 to 9 for electrical components and sub-assemblies.

**Revendications**

1. Compositions de résines époxydiques à durcissement rapide, à base de composés diglycidyliques, d'anhydrides d'acide carboxylique, d'esters acides à bas poids moléculaire, de sels métalliques d'acides organiques et d'adjuvants et d'additifs, caractérisées en ce qu'elles contiennent, outre de l'anhydride d'acide carboxylique, comme composés diglycidyliques, un ester diglycidylique, et comme accélérateur, de l'octoate de zinc dissous dans un ester acide à bas poids moléculaire, le cas échéant en même temps qu'un composé organique du phosphore.

2. Compositions de résines époxydiques à durcissement rapide suivant la revendication 1, caractérisées en ce qu'elles contiennent comme ester diglycidylique un ester diglycidylique de l'acide hexahydrophtalique ou ses dérivés.

3. Compositions de résines époxydiques à durcissement rapide suivant la revendication 1, caractérisées en ce qu'elles contiennent comme ester diglycidylique l'ester diglycidylique de l'acide phtalique ou ses dérivés.

4. Compositions de résines époxydiques à durcissement rapide suivant la revendication 1, caractérisées en ce qu'elles contiennent comme ester diglycidylique l'ester diglycidylique de l'acide tétrahydrophtalique.

5. Compositions de résines époxydiques à durcissement rapide suivant la revendication 1, caractérisées en ce qu'elles contiennent des esters glycidyliques aliphatiques.

6. Compositions de résines époxydiques à durcissement rapide suivant l'une des revendications 1 à 5, caractérisées en ce que l'ester acide à bas poids moléculaire est l'ester monoéthylique de l'acide hexahydrophtalique.

7. Compositions de résines époxydiques à durcissement rapide suivant l'une des revendications 1 à 5, caractérisée en ce qu'elles contiennent, comme ester acide à bas poids moléculaire, un composé de formule

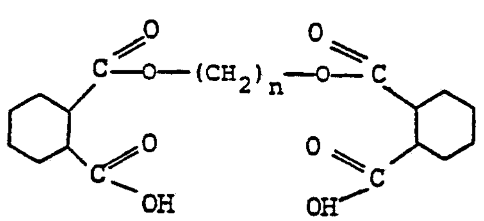

dans laquelle n va de 1 à 4.

8. Compositions de résines époxydiques à durcissement rapide suivant l'une des revendications 1 à

7. caractérisées en ce que le composé organique du phosphore est un phosphite.

9. Utilisation de compositions de résines époxydiques à durcissement rapide suivant l'une des revendications 1 à 8, à la préparation de compositions de résines de coulée, de matières à mouler et d'adhésifs.

10. Utilisation de compositions de résines époxydiques à durcissement rapide suivant l'une des revendications 1 à 9, pour des composants et des modules électriques.